# EUROPEAN PATENT APPLICATION

(11) **EP 2 512 064 A1**
(43) Date of publication of application: **17.10.2012**
(21) Application number: 11731685.1
(22) Date of filing: 07.01.2011
(51) Int. Cl.: H04L 12/24, H04L 29/08

(54) **DATA CONFIGURATION METHOD AND APPARATUS**

(30) Priority: 08.01.2010 CN 201010042718
(71) Applicant: Huawei Technologies Co., Ltd., Shenzhen, Guangdong 518129 (CN)
(72) Inventor: YE, Yaorong, Shenzhen Guangdong 518129 (CN); LI, Yuping, Shenzhen Guangdong 518129 (CN); ZOU, Lan, Shenzhen Guangdong 518129 (CN); ZHANG, Kai, Shenzhen Guangdong 518129 (CN)
(74) Representative: Schmitz, Alexander
(86) International application number: PCT/CN2011/070091
(87) International publication number: WO 2011/082684

(57) **Abstract**

Embodiments of the present invention provide a method and an apparatus for data configuration. The data configuration method includes: before a network element accesses a network, invoking, by a management unit, a first interface between the management unit and a managed unit to request the managed unit to download configuration data of the network element from a position designated by the management unit; and invoking, by the management unit, a second interface between the management unit and the managed unit to request the managed unit to generate a full configuration data file of the network element according to the configuration data. In addition, the embodiments of the present invention also provide a data configuration apparatus. Through the method and the apparatus for data configuration provided in the embodiments of the present invention, automatic download of the configuration data of the network element may be implemented, and human cost of deployment is reduced.

## Description

This application claims priority to Chinese Patent Application No. 201010042718.9, filed with the Chinese Patent Office on January 8, 2010, and entitled "METHOD AND APPARATUS FOR DATA CONFIGURATION", which is incorporated herein by reference in its entirety.

### FIELD OF THE INVENTION

The present invention relates to the field of communications technologies, and in particular, to a method and an apparatus for data configuration.

### BACKGROUND OF THE INVENTION

In a communication network, a network management mode may be divided into two kinds according to different complexities of networks: a first kind is a case that network elements are relatively few and types of the network elements are relatively single, and an carrier may implement management of the network elements just through an element management system (element management system, EMS); a second kind is a case that the network elements are relatively many or the types of the network elements are various, the carrier needs to set multiple EMSs to manage these network elements in groups, and the multiple EMSs may further be managed through a network management system (Network Management System, NMS). The NMS mainly implements a network management layer (Network Management Layer, NML) function in a telecommunication management network of the International Telecommunications Union (International Telecommunications Union Telecommunication Management Network, ITU TMN), and provides an operation management function which is oriented to a network device. The EMS mainly completes an element management layer (Element Management Layer, EML) function in the ITU TMN, that is, completes an operation maintenance function which is oriented to a device. An interface between the NMS and the EMS is referred to as a northbound interface (Interface-N, Itf-N). For the Itf-N, the NMS is usually referred to as a Manager, the EMS is usually referred to as an Agent, and the Agent interacts with the Manager through the Itf-N. At present, many carriers adopt a mode of common management by the Manager and the Agent.

Before accessing the communication network and providing a communication service (this phase is usually referred to as deployment of the network element), the network element needs to experience a series of preparation work and then it can provide a service normally. The preparation work is divided into three phases: a data preparation phase, a hardware installation phase, and a phase after the network element is powered on and before a service is provided formally. In the prior art, the data preparation phase of the deployment of the network element is completed by an administrator through an operation of the Agent, for example, the administrator prepares planning data, and completes data import, check, and generation of full configuration data in the Agent, thereby resulting in very high human cost of deployment.

### SUMMARY OF THE INVENTION

Embodiments of the present invention provide a solution for data configuration, through the solution, a data preparation phase may be completed just through a Manager, and an administrator is not required to perform operations on an Agent, thereby implementing automation of deployment of a network element, and reducing relevant human cost.

An embodiment of the present invention provides a data configuration method, where the method includes:
before a network element accesses a network, invoking, by a management unit, a first interface between the management unit and a managed unit to request the managed unit to download configuration data of the network element from a position that is designated by the management unit; and
invoking, by the management unit, a second interface between the management unit and the managed unit to request the managed unit to generate a full configuration data file of the network element according to the configuration data.

An embodiment of the present invention further provides a data configuration method, where the method includes:
before a network element accesses a network, and when a management unit invokes a first interface between the management unit and a managed unit, downloading, by the managed unit, configuration data of the network element from a position that is designated by the management unit; and
when the management unit invokes a second interface between a file management unit and the managed unit, generating, by the managed unit, a full configuration data file of the network element according to the configuration data.

An embodiment of the present invention provides a configuration apparatus, including:
a first invoking module, configured to invoke, before a network element accesses a network, a first interface between the apparatus and a managed unit to request the managed unit to download configuration data of the network element from a designated position; and
a second invoking module, configured to invoke a second interface between the apparatus and the managed unit to request the managed unit to generate a full configuration data file of the network element according to the configuration data.

Through the method and the apparatus for data configuration that are provided in the foregoing embodiments of the present invention, automatic download of the configuration data of the network element may be implemented, and human cost of deployment is reduced.

### BRIEF DESCRIPTION OF THE DRAWINGS

FIG. 1 is a schematic flow chart of a first method embodiment of the present invention;
FIG. 2 is a schematic flow chart of a second method embodiment of the present invention;
FIG. 3 is a schematic flow chart of a third method embodiment of the present invention;
FIG. 4 is a schematic flow chart of a fourth method embodiment of the present invention;
FIG. 5 is a schematic flow chart of a fifth method embodiment of the present invention;
FIG. 6 is a schematic flow chart of a sixth method embodiment of the present invention;
FIG. 7 is a schematic flow chart of a seventh method embodiment of the present invention; and
FIG. 8 is a schematic structural diagram of an apparatus embodiment of the present invention.

### DETAILED DESCRIPTION OF THE EMBODIMENTS

The technical solutions in the embodiments of the present invention will be clearly and fully described in the following with reference to the accompanying drawings. Apparently, the embodiments to be described are only a part of the embodiments rather than all of the embodiments of the present invention. All other embodiments obtained by persons skilled in the art based on the embodiments of the present invention without creative efforts shall fall within the protection scope of the present invention.

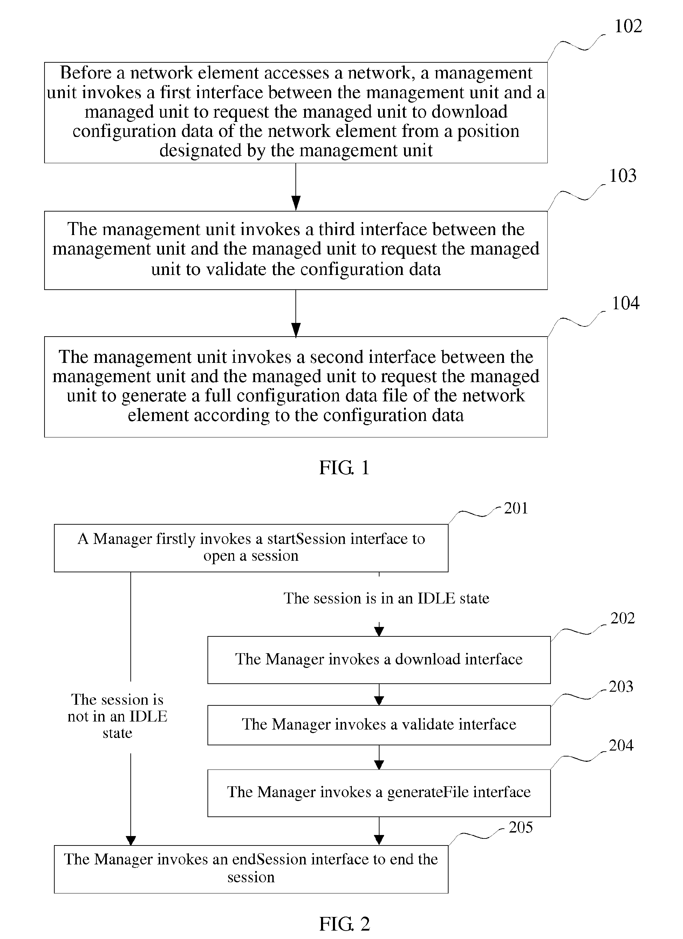

Referring to what is shown in FIG. 1, a first method embodiment of the present invention includes the following steps:
Step 102: Before a network element accesses a network, a management unit invokes a first interface between the management unit and a managed unit to request the managed unit to download configuration data of the network element from a position designated by the management unit.

The foregoing position designated by the management unit may be a physical entity where the management unit is located or a third-party server.

Step 104: The management unit invokes a second interface between the management unit and the managed unit to request the managed unit to generate a full configuration data file of the network element according to the configuration data.

The foregoing full configuration data file is a file formed by all or a part of configuration data that supports deployment of the network element.

Optionally, before step 104, the following step may be further included:
Step 103: The management unit invokes a third interface between the management unit and the managed unit to request the managed unit to validate the configuration data.

Optionally, after step 104, the method may further include: the managed unit stores the full configuration data file in the managed unit or the third-party server.

Optionally, after step 104, the method may further include: after the network element accesses the network, the managed unit sends the stored full configuration data file to the network element, where the sending manner may be a manner such as file transmission, for example, using an ftp.

Because the first interface, the second interface, or the third interface in the foregoing steps may be a newly defined interface, and may also be an interface that is obtained after revision is made to an existing interface in BulkCM (bulk configuration management), they are introduced in the following through embodiments, respectively.

If a manner of newly defined interfaces is adopted, before implementing the method described in a second embodiment of the present invention, the following northbound interfaces need to be defined:
(1) A startSession interface: By invoking the interface, a Manager opens a session and initializes temporary resources that are related to the session in an Agent.
   An input parameter, an output parameter, and a prerequisite of invoking the interface are as follows:
   the input parameter: sessionId, where the parameter is used to identify a new session;
   the output parameter: an operation result (successful or failed); and
   the prerequisite: the foregoing sessionId is not in use currently.
(2) An endSession interface: By invoking the interface, the Manager ends a session, deletes the files (such as a temporary file and a session log file) that are related to the session in the Agent, and releases related resources in a system. If a "pre-activated" interface is invoked before, the Manager invokes the endSession interface to end the session and release all internal local resources that are allocated to the "pre-activated" interface. If a session state is being performed, such as being uploaded, being downloaded, or being activated, the Manager is refused to invoke the interface to end the session.
   An input parameter, an output parameter, and a prerequisite of invoking the interface are as follows:
   the input parameter: sessionId, where the parameter is used to identify a new session;
   the output parameter: an operation result (successful or failed); and
   the prerequisite: the foregoing sessionId is not in use currently.
(3) A download interface: By invoking the interface, the Manager requests the Agent to download and manage a file that includes the configuration data. The Agent may acquire the configuration data file from a globally unique data file reference that is designated.
   In a download process, the Agent may check whether a format of a downloaded configuration data file is correct, and the Agent does not need to check a semantic error in the configuration data file in the process of downloading the configuration data.
   An input parameter, an output parameter, and a prerequisite of invoking the interface are as follows:
   the input parameter: sessionId, which is used to identify a session that is related to the download of the configuration data file; and downloadDataFileReference, which is used to define a globally unique file reference that corresponds to the data to be downloaded, where the globally unique file reference is usually a specific file storage address;
   the output parameter: an operation result (successful or failed); and
   the prerequisite: the session identified by the sessionId is successfully opened, and is in an idle (IDLE) state.
(4) A validate interface: By invoking the interface, the Manager requests the Agent to validate the downloaded configuration data. For invoking the interface, the Manager may request the Agent to check an error related to the downloaded configuration data before performing "pre-activation" or "activation" on the configuration data.
   An input parameter, an output parameter, and a prerequisite of invoking the interface are as follows:
   the input parameter: sessionId, which is used to identify a session that is related to the download of the configuration data file;
   the output parameter: an operation result (successful or failed); and
   the prerequisite: the Agent successfully opens the session identified by sessionId, and performs a "download" operation already or repeatedly performs a "download" operation.
(5) A generateFile interface: By invoking the interface, the Manager requests the Agent to generate a full configuration data file.
   An input parameter, an output parameter, and a prerequisite of invoking the interface are as follows:
   the input parameter: sessionId, which is used to identify a session that is related to the download of the configuration data file;
   the output parameter: an operation result (successful or failed); and
   the prerequisite: the Agent successfully opens the session identified by sessionId, and check of the downloaded data is completed.

After the foregoing interfaces are set, by invoking the foregoing interfaces, the Manager may request the Agent to download the configuration data that is stored on the Manager or other third-party servers to the Agent. Specifically referring to what is shown in FIG. 2, the second embodiment of the present invention includes the following steps:
Step 201: Before a network element accesses a network, the Manager firstly invokes the startSession interface to open a session; if the session is in the IDLE state, execute step 202; if the session is not in the IDLE state, execute step 205.
Step 202: The Manager invokes the download interface to request the Agent to download and manage a file that includes configuration data; if the download is completed, execute step 203; if the download is failed, execute step 205.
Step 203: The Manager invokes the validate interface to request the Agent to validate the configuration data that is downloaded before; if the validation is completed, execute step 204; if the validation is failed, execute step 205.

The foregoing step 203 is optional, and after the download is completed in step 202, step 204 may be executed directly.

Step 204: The Manager invokes the generateFile interface to request the Agent to generate the full configuration data file according to the foregoing validated data, and executes step 205.

Step 205: The Manager invokes the endSession interface to end the foregoing session and to request the Agent to delete the file that is related to the session and release related resources in the system.

The foregoing file related to the session includes the temporary file, the session log file, and so on.

Through the foregoing steps, it may be implemented that, before the network element accesses the network, the configuration data is downloaded to the Agent through the Manager. The foregoing processes are automatically completed through the Manager invoking newly defined self configuration interfaces between the Manager and the Agent, and a human does not need to participate, thereby saving a lot of human cost. Also, the configuration data of the network element may be downloaded to the Agent in advance through the method, and when the network element accesses the network, the Agent may be notified at any time of delivering the data to the network element, thereby reducing time of deployment.

Optionally, in addition to the foregoing defined interface, a feedback message may also be defined: notifySessionStateChanged. The Agent may feed back a condition of batch processing of all the configuration to the Magnager through the message, where the states of the configuration data mainly include the following several types:
download failed (Download Failed)
download completed (Download Completed)
validation failed (Validation Failed)
validation completed (Validation Completed)
configuration file generation failed (generateFile Failed)
configuration file validation completed (generateFile Completed)

For example, after the Manager invokes the download interface, the Agent may feed back that the data download is completed or failed to the Magnager through a notifySessionStateChanged message. If the download is completed, information indicated in the notifySessionStateChanged message is Download Completed. If the download is failed, the information indicated in the notifySessionStateChanged message is Download Failed. After the validate interface or the generateFile interface is invoked, a manner that the Agent may feed back a configuration data state to the Magnager through the notifySessionStateChanged message is similar to this, which is not introduced one by one here again.

Optionally, in addition to the foregoing defined interfaces, a getSessionLog interface may be further defined, and the Manager may acquire a log of an activity result that is related to a configuration data file operation and of a designated session from the Agent by invoking the interface, where the interface may be invoked in any session state, and a current session state is not changed.

An input parameter, an output parameter, and a prerequisite of invoking the interface are as follows:
the input parameter: sessionId, which is used to identify a designated session; and logFileReference, which is used to define an address and a file name for storing a result on the Manager;
the output parameter: an operation result (successful or failed); and
the prerequisite: the session identified by the sessionID is successfully opened, and is not ended.

The foregoing is the method for automatically downloading the configuration data of the network element by adopting newly defined interfaces, and the method for implementing automatic download of the configuration data of the network element by revising existing interfaces in the BulkCM is introduced through specific embodiments in the following.

Before the embodiment of the present invention is introduced, an existing BulkCM process needs to be introduced briefly for convenience of understanding of the readers.

The Bulk CM is applied to upload (Upload) and download (download) of northbound configuration data, and a complete state machine, a notification mechanism, and session log (SessionLog) processing are defined in a standard. However, its application focuses on a scene of daily maintenance, that is, the case that the deployment of the network element is completed, and the scene of the deployment of the network element cannot be supported very well. Because a prerequisite of invoking an Activate interface in the Bulk CM is that the network element must be online; otherwise, the invoking is failed; and in actual deployment, in a data preparation phase, it is very possible that the network element does not complete hardware installation, and therefore, invoking the Activate interface may be failed. To complete the deployment by directly using the existing Bulk CM, the inventor of this application thought of the following two solutions through research:
(1) Before the hardware installation, the Manager invokes StartSession to start a session, then invokes the download interface and the validate interface to complete delivering and checking of the configuration data, and invokes the Activate interface after the network element is online.
(2) The Manager plans beforehand the configuration data of the network element, but does not start a Bulk CM program; after the hardware installation of the network element is completed and the Agent is accessed, the Bulk CM program is invoked to deliver the configuration data to the network element.

The foregoing first solution has no problem with the case that the network element is online, but is not appropriate for the case that the network element is online after a relatively long time passes. Because once the startSession interface of the northbound interfaces is invoked to start a session, the Session cannot be interrupted before the network element accesses the network; because a Session resource is limited, this manner occupies a limited system resource for a long time.

For the foregoing second solution, because the configuration data of the network element relates to many parameters, and the Manager, before sending the configuration data to the network element, does not invoke the Validate interface to check the configuration data of the network element, once an error occurs in the process of delivering the configuration data to the network element, it takes a very long time to validate and reconfigure the data, thereby affecting the progress of the deployment seriously.

To sum up, neither of the foregoing two solutions can effectively support an application scene of the deployment of a newly added network element device, and in the following embodiments of the present invention, the existing interfaces in the Bulk CM are revised and extended so that the Bulk CM process not only can support the scene of new deployment, but also can be compatible with the scene of daily maintenance.

In order to make it clear to the readers which interfaces in the BulkCM are revised in the embodiment of the present invention, a definition of an original interface and a definition of a revised new interface in the BulkCM are compared in detail in the following.

The defined interfaces in the BulkCM mainly include:

### (1) The download (download) interface

The definition of the original interface: By invoking the interface, the Manager requests the Agent to download and manage a file that includes the configuration data. The Agent may acquire this configuration data file from a globally unique data file reference that is designated.

The definition of the new interface: the same as the definition of the original interface.

### (2) The validate (validate) interface

The definition of the original interface: The invoking of the interface is optional, and by invoking the interface, the Manager requests the Agent to validate the configuration data that is downloaded before. For invoking the interface, the Manager may invoke a pre-activated interface or an activated interface to request the Agent to check the error related to the configuration data that is downloaded before and then to perform pre-activation or "activation" on the configuration data. The interface includes an optional "activationMode" parameter which indicates an activation manner.

The definition of the new interface: The Manager invokes the interface to request the Agent to validate the downloaded configuration data; and compared with a traditional interface, the interface does not need the "activationMode" parameter (because real activation of the configuration data at a network element side is not related to under the new deployment scene, the activation mode does not need to be set).

### (3) The activate (activate) interface

The definition of the original interface: The Manager invokes the interface to request the Agent to activate the downloaded configuration data, and the prerequisite of invoking the interface is that the network element accesses the network.

The definition of the new interface: The Manager invokes the interface to request the Agent to generate the full configuration data file according to the downloaded configuration data.

Reference may be made to a standard document 3GPP TS 32.612 for details of a function and a parameter of an original definition of the foregoing interfaces, and after a difference between the foregoing original interface and the revised new interface is introduced, the method of the present invention is introduced in detail through specific embodiments in the following.

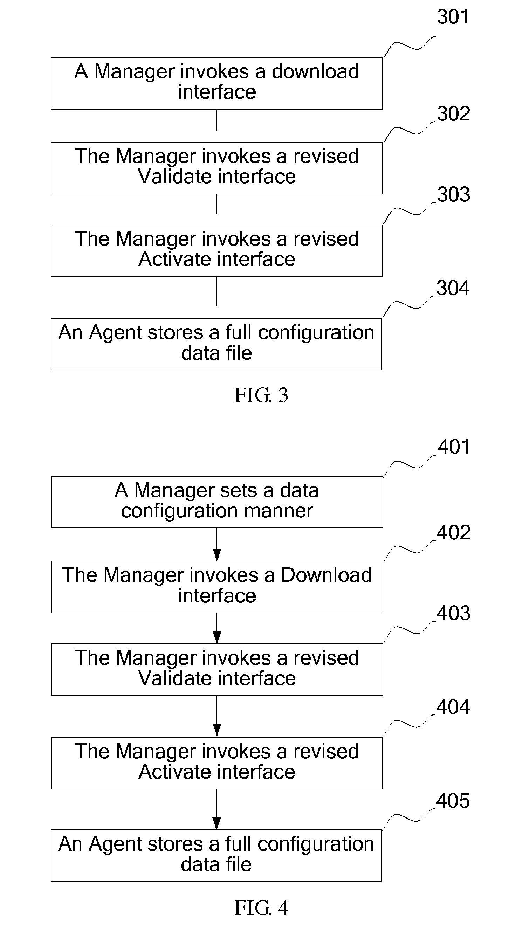

Referring to what is shown in FIG. 3, a third embodiment of the present invention provides a method for acquiring data, and the method is implemented through the following steps:
Step 301: A Manager invokes a Download interface to request an Agent to download a file that includes configuration data from a position designated by the Manager.
Step 302: The Manager invokes a revised Validate interface to request the Agent to validate the downloaded configuration data to determine whether it is legal.
Step 303: The Manager invokes a revised Active interface to request the Agent to generate a full configuration data file of a network element according to validated configuration data.

The foregoing step 302 is optional, and step 303 may be executed directly after step 301is executed, that is, in step 303, the Manager invokes the revised Active interface to request the Agent to directly generate the full configuration data file of the network element according to the downloaded configuration data.

Optionally, the following step may further be included after step 303:
Step 304: The Agent stores the foregoing full configuration data file. For example, the Agent may store the foregoing full configuration data file in an entity that corresponds to a certain path, and the entity corresponding to the path may be a physical entity where the Agent is located, and may also be a third-party server.

Optionally, the following step may further be included after step 304: if the network element accesses the network, the Agent delivers the full configuration data file to the network element.

It may be implemented through the foregoing method that before the network element accesses the network, the Manager automatically downloads the configuration data of the network element to the Agent in advance by invoking a revised BulkCM interface so that after being powered up, the network element may notify at any time the Agent of delivering the data required by the network element, thereby saving human cost. Also, smooth progressing of deployment is further ensured by validating the configuration data in advance.

To enable an embodiment of the present invention to be compatible with an application of traditional BulkCM in a maintenance scene, in a fourth embodiment of the present invention, a configuration file sent by a Manager to an Agent may be made some revision, for example, an attribute scenarioType that is used to indicate a data configuration manner may be added in a bulkCmConfigDataFile node of the configuration file that is delivered by the Manager to the Agent. A specific method for adding the attribute is as follows:

```
          <element name="bulkCmConfigDataFile">
   <complexType>
       <sequence>
          <element name="fileHeader">
   [...]
   </element>
   <element name="configData" maxOccurs="unbounded">
   [...]
   </element>
   <element name="fileFooter">
   [...]
   </element>
   </sequence>
   <attribute name="scenarioType" use="required">
          <simpleType>
          <restriction base="string">
          <enumeration value="tradition"/>
          <enumeration value="self configuration"/>
                                 </restriction>
          <simpleType>
          </attribute>
          </complexType>
          </element>
```

After the foregoing configuration file delivered by the Manager to the Agent is set, meanwhile, a logic operation of each interface needs to be accordingly set in the Agent, for example, when a value of the foregoing scenarioType is trandition, the Agent adopts a traditional data configuration manner; in this case, a meaning of each interface of the traditional Bulk CM between the Manager and the Agent is not changed; otherwise, when the value of the foregoing scenarioType is self configuration, the Manager and the Agent interact with each other according to a revised Bulk CM interface of this patent.

After revising the foregoing configuration file and interfaces, the Manager may choose to perform data configuration through a traditional configuration manner or a self configuration manner. Referring to what is shown in FIG. 4, the fourth embodiment of the present invention specifically includes the following steps:
Step 401: The Manager sets the data configuration manner as the self configuration manner or the traditional configuration manner.
Step 401 specifically is, the Manager sets a scenarioType attribute of the foregoing configuration file, and sets the scenarioType attribute as self configuration (the self configuration manner) or tradition (the traditional configuration manner).
Step 402: The Manager invokes a Download interface to request the Agent to download the foregoing configuration file that includes configuration data from a position designated by the Manager; if the scenarioType attribute in the configuration file is set as the self configuration manner, execute step 403; if the scenarioType attribute in the configuration file is set as the traditional configuration manner, validate and activate the configuration data of a network element according to the traditional configuration manner.
Step 403: The Manager invokes a revised Validate interface to request the Agent to validate the downloaded configuration data to determine whether it is legal.
Step 404: The Manager invokes a revised Active interface to request the Agent to generate a full configuration data file of the network element according to the validated configuration data.

The foregoing step 403 is optional, and step 404 may be executed directly after step 402 is executed, that is, in step 404, the Manager invokes the revised Active interface to request the Agent to directly generate the full configuration data file of the network element according to the downloaded configuration data.

Optionally, the following step may further be included after step 404:
Step 405: The Agent stores the foregoing full configuration data file. For example, the Agent may store the foregoing full configuration data file in an entity that corresponds to a certain path, and the entity corresponding to the path may be a physical entity where the Agent is located, and may also be a third-party server.

Optionally, the following step may be further included after step 405: if the network element accesses the network, the Agent delivers the full configuration data file to the network element.

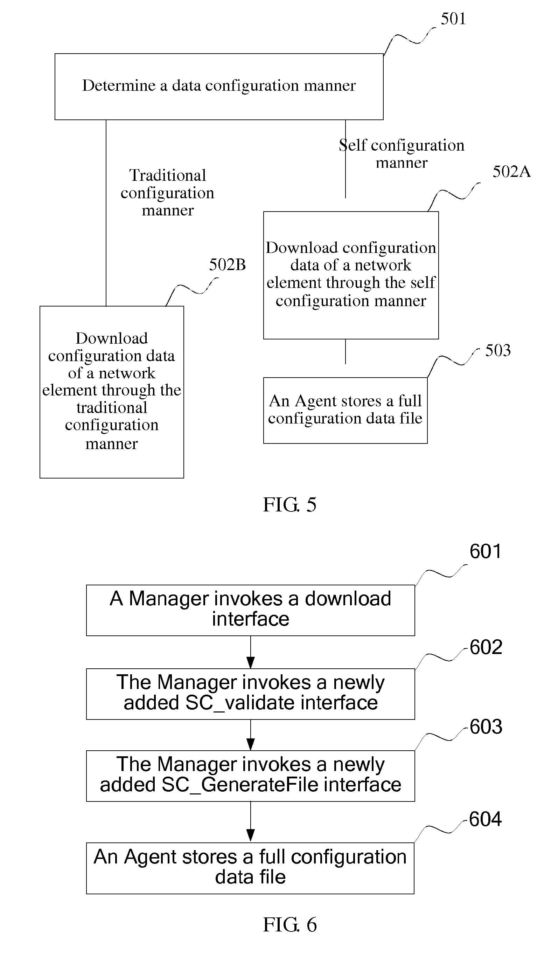

In addition to a data configuration manner being indicated in the foregoing through a configuration file, in an embodiment of the present invention, the data configuration manner may also be indicated by setting an interface. Referring to what is shown in FIG. 5, a fifth embodiment of the present invention is implemented through the following method:

Firstly, a parameter that is used to indicate the data configuration manner is newly added in an existing interface between a Manager and an Agent.

For example, a scenarioType parameter is added in a Validate interface between the Agent and the Manager, where the scenarioType parameter has the following two values:
(1) tradition: indicates a traditional configuration manner;
(2) self configuration: indicates a self configuration manner.

After adding the foregoing scenarioType parameter, a logic operation of the Validate interface further needs to be accordingly set. If a value of the scenarioType parameter is "tradition", the Validate interface operates according to a traditional configuration manner, for example, an activationMode parameter of the Validate interface is set as valid. If the value of the scenarioType parameter is "self configuration", the Validate interface operates according to the self configuration manner (that is, a revised interface), for example, the activationMode parameter of the Validate interface is set as invalid.

In addition to this, one scenarioType parameter further needs to be added in an Activate interface between the Agent and the Manager, where the scenarioType parameter has the following two values:
(1) tradition: indicates a traditional configuration manner;
(2) self configuration: indicates a self configuration manner.

After adding the foregoing scenarioType parameter, a logic operation of the Activate interface further needs to be accordingly set. If a value of the scenarioType parameter is "tradition", the Activate interface operates according to a traditional configuration manner, for example, an original activationMode parameter and an original fallbacEnabled parameter of the Activate interface are set as valid. Otherwise, if the value of the scenarioType parameter is "self configuration", the Validate interface operates according to the self configuration manner (that is, a revised interface), for example, the activationMode parameter and the fallbacEnabled parameter are set as invalid.

After the foregoing interfaces are set, the fifth embodiment of the present invention mainly includes the following steps:
501: Determine the data configuration manner; if a network element does not access a network, execute step 502A; if the network element accesses the network, execute step 502B.
502A: The Manager invokes the foregoing revised interface to request the Agent to download configuration data of the network element from the Manager to request the Agent to validate the configuration data and generate a full configuration data file of the network element; in this process, the values of the scenarioType parameters of the Validate interface and the Activate interface need to be set as "self configuration" so that the Validate interface and the Activate interface operate according to the revised interfaces.

The Manager may choose a download manner of the configuration data by setting the scenarioType parameter when invoking the foregoing interface. Except that the newly added parameter needs to be set, the process of invoking the interface is similar to the process described in step 301 to step 303, which is therefore not described here in detail again.

Step 502B: The Manager requests the Agent to validate and activate the configuration data of the network element according to the traditional configuration manner. The Manager just needs to set the values of the scenarioType parameters of the Validate interface and the Activate interface as "tradition" when invoking the Validate interface or the Activate interface.

Optionally, the following step may be further included after step 502A or step 502B:
Step 503: The Agent stores the foregoing full configuration data file. For example, the Agent may store the foregoing full configuration data file in an entity that corresponds to a certain path, and the entity corresponding to the path may be a physical entity where the Agent is located, and may also be a third-party server.

Optionally, the following step may be further included after step 503: if the network element accesses the network, the Agent delivers the full configuration data file to the network element.

In addition to the foregoing description that an existing interface in the BulkCM is redefined, in an embodiment of the present invention, two self configuration interfaces may be newly added on basis of defined interfaces in original BulkCM, and automatic download of configuration data of a network element is commonly implemented through the existing interfaces and newly added self configuration interfaces in the BulkCM.

Firstly, two interfaces used for self configuration are newly added between an Agent and a Manager, that is, an SC_Validate interface and an SC_GenerateFile interface, where the SC_Validate interface is used to check batch configuration data under a self configuration scene, and the SC_GenerateFile interface is used to generate a full configuration data file under the self configuration scene.

An input parameter and an output parameter of the SC_Validate interface are as follows:
the input parameter: sessionId (The parameter sessionId identifies a related session.); and
the output parameter: an operation result (successful or failed).

An input parameter and an output parameter of the SC_GenerateFile interface are as follows:
the input parameter: sessionId (The parameter sessionId identifies a related session.); and
the output parameter: an operation result (successful or failed).

Referring to what is shown in FIG. 6 for details, a method of a sixth embodiment of the present invention specifically includes the following steps:
Step 601: The Manager invokes a download interface to request the Agent to download a file that includes the configuration data from a position designated by the Manager.
Step 602: The Manager invokes a newly added SC_validate interface to validate downloaded configuration data to determine whether it is legal.
Step 603: The Manager invokes a newly added SC_GenerateFile interface to request the Agent to generate the full configuration data file of the network element according to validated configuration data.

The foregoing step 602 is optional, and step 603 may be executed directly after step 601 is executed, that is, in step 603, the Manager invokes the newly added SC_GenerateFile interface to request the Agent to directly generate the full configuration data file of the network element according to the downloaded configuration data.

Optionally, the following step may be further included after step 603:
Step 604: The Agent stores the foregoing full configuration data file. For example, the Agent may store the foregoing full configuration data file in an entity that corresponds to a certain path, and the entity corresponding to the path may be a physical entity where the Agent is located, and may also be a third-party server.

Optionally, the following step may be further included after step 604: if the network element accesses the network, the Agent delivers the full configuration data file to the network element.

In addition to the foregoing description that two self configuration interfaces are further newly added on basis of a defined interface in BulkCM, in an embodiment of the present invention, one interface may be further newly added only on basis of the defined interface in original BulkCM, and automatic download of configuration data of a network element is commonly implemented through an existing interface and a newly added interface in the BulkCM.

Firstly, one interface used for self configuration is newly added between an Agent and a Manager, that is, a GenerateSCFile interface, and the Manager requests the Agent to generate a full configuration data file by invoking the interface.

An input parameter and an output parameter of the GenerateSCFile interface are as follows:
the input parameter: sessionId, which is used to identify a session that is related to configuration data download; and the output parameter: an operation result (successful or failed).

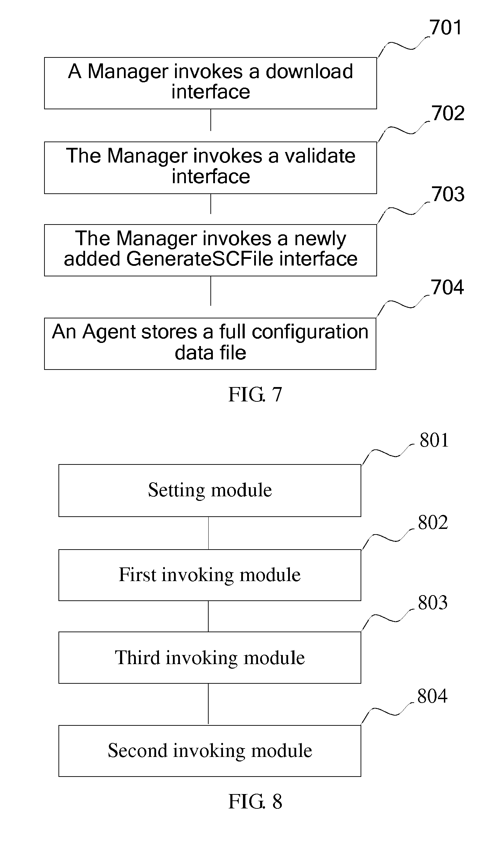

Referring to what is shown in FIG. 7 for details, a method of a seventh embodiment of the present invention specifically includes the following steps:
Step 701: The Manager invokes a download interface to request the Agent to download a file that includes the configuration data from a position designated by the Manager.
Step 702: The Manager invokes a validate interface (an optional parameter activationMode of the validate interface is set as invalid at this time) in the BulkCM to validate downloaded configuration data to determine whether it is legal.
Step 703: The Manager invokes a newly added GenerateSCFile interface to request the Agent to generate the full configuration data file of the network element according to validated configuration data.

The foregoing step 702 is optional, and step 703 may be executed directly after step 701 is executed, that is, in step 703, the Manager invokes the GenerateSCFile interface to request the Agent to directly generate the full configuration data file of the network element according to the downloaded configuration data.

Optionally, the following step may be further included after step 703:
Step 704: The Agent stores the foregoing full configuration data file. For example, the Agent may store the foregoing full configuration data file in an entity that corresponds to a certain path, and the entity corresponding to the path may be a physical entity where the Agent is located, and may also be a third-party server.

Optionally, the following step may be further included after step 704: if the network element accesses the network, the Agent delivers the full configuration data file to the network element.

It should be noted that, in the foregoing method embodiment, the Manager described may be located in an NMS, and the Agent may be located in an EMS or the network element.

Through the foregoing method provided in the present invention, it may be implemented that, before the network element accesses the network, a management unit invokes the self configuration interface to deliver the configuration data of the network element to a managed unit in advance. No administrator is required to operate the Agent in a process of deployment of a network element device, thereby saving human cost. Also, the configuration data is validated before the configuration data is delivered to the network element, thereby ensuring smooth progressing of the deployment.

In addition to the foregoing method described in an embodiment of the present invention, the present invention further provides an apparatus for acquiring data. Referring to what is shown in FIG. 8, the apparatus includes:
a first invoking module 802, configured to invoke, before a network element accesses a network, a first interface between the apparatus and a managed unit to request the managed unit to download configuration data of the network element from a designated position; and
a second invoking module 804, configured to invoke a second interface between the apparatus and the managed unit to request the managed unit to generate a full configuration data file of the network element according to the configuration data.

Referring to what is shown in FIG. 8, optionally, the apparatus may include:
a third invoking module 803, configured to invoke, before the second invoking module 804 invokes a second interface between a management unit and the managed unit, a third interface between the apparatus and the managed unit to request the managed unit to validate the configuration data.

Optionally, the apparatus may further include:
a setting module 801, configured to set, before the first invoking module 802 invokes a first interface between the management unit and the managed unit, a data configuration manner as a self configuration manner or a traditional configuration manner, and start the first invoking module 802 if the data configuration manner is the self configuration manner.

The foregoing apparatus may be located in an element management system.

Through the foregoing apparatus described in the embodiment of the present invention, it may be implemented that, before the network element accesses the network, the management unit invokes a self configuration interface to deliver the configuration data of the network element to the managed unit in advance. No administrator is required to operate an Agent in a process of deployment of a network element device, thereby saving human cost. Also, the configuration data is validated before the configuration data is delivered to the network element, thereby ensuring smooth progressing of the deployment.

Persons of ordinary skill in the art may understand that all or a part of steps of the foregoing method embodiments, or all or a part of steps executed by the foregoing apparatus may be completed by a program instructing relevant hardware.

The foregoing descriptions are merely exemplary embodiments of the present invention, but are not intended to limit the present invention. Any modification, equivalent replacement, or improvement that is made within the spirit and principle of the present invention should all fall within the protection scope of the present invention.

## Claims

1. A data configuration method, comprising:
before a network element accesses a network, invoking, by a management unit, a first interface between the management unit and a managed unit to request the managed unit to download configuration data of the network element from a position that is designated by the management unit; and
invoking, by the management unit, a second interface between the management unit and the managed unit to request the managed unit to generate a full configuration data file of the network element according to the configuration data.

2. The method according to claim 1, wherein the first interface is a download interface, and the second interface is an Activate interface, or a generateFile interface, or an SC_GenerateFile interface, or a GenerateSCFile interface.

3. The method according to claim 2, wherein an input parameter and an output parameter of the GenerateSCFile interface are:
the input parameter: sessionId, which is used to identify a session that is related to download of a configuration data file; and
the output parameter: an operation result.

4. The method according to claim 1 or 2, wherein before the invoking, by the management unit, the second interface between the management unit and the managed unit to request the managed unit to generate the full configuration data file of the network element according to the configuration data, the method further comprises: invoking, by the management unit, a third interface between the management unit and the managed unit to request the managed unit to validate the configuration data.

5. The method according to claim 4, wherein the third interface is a validate interface.

6. The method according to claim 2, wherein the Activate interface comprises a parameter that is used to indicate that a data configuration manner is a self configuration manner or a traditional configuration manner, and when the management unit invokes the Activate interface, by setting the parameter, the Activate interface is instructed to operate according to the self configuration manner or to operate according to the traditional configuration manner.

7. The method according to claim 5, wherein the validate interface comprises a parameter that is used to indicate that a data configuration manner is a self configuration manner or a traditional configuration manner, and when the management unit invokes the validate interface, by setting the parameter, the validate interface is instructed to operate according to the self configuration manner or to operate according to the traditional configuration manner.

8. The method according to claim 1, wherein before the invoking, by the management unit, the first interface between the management unit and the managed unit, the method further comprises: setting, by the management unit, a data configuration manner as a self configuration manner or a traditional configuration manner, and if the data configuration manner is the self configuration manner, invoking, by the management unit, the first interface between the management unit and the managed unit to request the managed unit to download the configuration data of the network element from the position that is designated by the management unit.

9. The method according to claim 8, wherein the setting, by the management unit, the data configuration manner as the self configuration manner or the traditional configuration manner, specifically is:
in a configuration file that is delivered by the management unit to the managed unit, adding an attribute that is used to indicate that the data configuration manner is the self configuration manner or the traditional configuration manner.

10. The method according to claim 1, wherein the position that is designated by the management unit is a physical entity where the management unit is located or a third-party server.

11. A data configuration method, comprising:
before a network element accesses a network, and when a management unit invokes a first interface between the management unit and a managed unit, downloading, by the managed unit, configuration data of the network element from a position that is designated by the management unit; and
when the management unit invokes a second interface between a file management unit and the managed unit, generating, by the managed unit, a full configuration data file of the network element according to the configuration data.

12. The method according to claim 11, further comprising:
when the management unit invokes a third interface between the management unit and the managed unit, validating, by the managed unit, the configuration data.

13. The method according to claim 11, further comprising:
storing the full configuration data file in a physical entity where the managed unit is located or a third-party server.

14. The method according to claim 13, further comprising:
after the network element accesses the network, sending, by the managed unit, the full configuration data file to the network element.

15. A data configuration apparatus, comprising:
a first invoking module, configured to invoke, before a network element accesses a network, a first interface between the apparatus and a managed unit to request the managed unit to download configuration data of the network element from a designated position; and
a second invoking module, configured to invoke a second interface between the apparatus and the managed unit to request the managed unit to generate a full configuration data file of the network element according to the configuration data.

16. The apparatus according to claim 15, further comprising:
a third invoking module, configured to invoke, before the second invoking module invokes a second interface between a management unit and the managed unit, a third interface between the apparatus and the managed unit to request the managed unit to validate the configuration data.

17. The apparatus according to claim 15 or 16, further comprising:
a setting module, configured to set, before the first invoking module invokes a first interface between the management unit and the managed unit, a data configuration manner as a self configuration manner or a traditional configuration manner.
